# EUROPÄISCHE PATENTSCHRIFT

(11) **EP 2 132 550 B1**
(45) Veröffentlichungstag und Bekanntmachung des Hinweises auf die Patenterteilung: **07.11.2012**
(21) Anmeldenummer: 08748344.2
(22) Anmeldetag: 03.03.2008
(51) Int. Cl.: G01N 1/32

(54) **VERFAHREN ZUR HERSTELLUNG EINER PROBE FÜR DIE ELEKTRONENMIKROSKOPIE**
METHOD FOR THE PRODUCTION OF A SAMPLE FOR ELECTRON MICROSCOPY
PROCÉDÉ DE FABRICATION D'UN ÉCHANTILLON POUR LA MICROSCOPIE ÉLECTRONIQUE

(30) Priorität: 06.03.2007 CH 358072007
(43) Veröffentlichungstag der Anmeldung: 16.12.2009
(73) Patentinhaber: Leica Mikrosysteme GmbH, 1170 Wien (AT)
(72) Erfinder: GRÜNEWALD, Wolfgang, 09123 Chemnitz (DE); VOGT, Alex, CH-9470 Buchs (CH); GABATHULER, Alexander, CH-9478 Azmoos (CH)
(74) Vertreter: Wegmann, Urs
(86) Internationale Anmeldenummer: PCT/CH2008/000085
(87) Internationale Veröffentlichungsnummer: WO 2008/106815

(56) Entgegenhaltungen:
- EP-A- 1 447 656
- US-A- 5 009 743
- US-A- 5 472 566
- US-B2- 6 914 244

## Beschreibung

Die Erfindung bezieht sich auf Verfahren zur Herstellung einer Probe für die Elektronenmikroskopie, die aus einem Festkörpermaterial geschnitten wird gemäss Oberbegriff nach Anspruch 1.

Proben für die Elektronenmikroskopie können auf verschiedene Art und Weise präpariert werden. Um Proben mit einem Elektronenmikroskop betrachten zu können, müssen diese entsprechend definiert bearbeitet werden durch Freilegen der zu betrachtenden Beobachtungsoberfläche mittels eines Ätzverfahrens. Bei rasterelektronenmikroskopischer (REM) Betrachtung wird die gewünschte Oberfläche betrachtet. Bei Betrachtung der Probe mit einem Transmissionselektronenmikroskop (TEM) wird die Probe durch das Ätzen derart gedünnt, dass diese im TEM von den Elektronen durchstrahlt werden können und die Probe in Transmission betrachtet werden kann. Hierbei ist die Qualität der Bildauflösung ganz wesentlich von der Qualität der Probe abhängig. Dafür sollte die Probe auf einen entsprechend gewünschten Oberflächenbereich für die REM - Methode oder auf eine gewünschte definierte Dicke für die TEM - Methode gleichförmig eingestellt werden durch einen entsprechend geeigneten Ätzvorgang. Hierbei ist es wichtig, dass bei diesem Ätzvorgang die Probenstruktur nicht durch den Vorgang selbst verändert wird. Zur Herstellung einer solchen Probe wird zuerst ein Stück des zu untersuchenden Materiales aus dem Probenkörper mechanisch herausgesägt und anschliessend durch Ätzen behandelt, um die Probe anschliessend mit einem REM oder TEM untersuchen zu können. Die nasschemische Ätzmethode ist diesbezüglich nicht zielführend. Aus diesem Grunde werden heute für die hochqualitativen elektronenmikroskopischen Betrachtungen mit REM oder TEM, die Proben mit einem Ionenstrahl durch Ionenätzen, wie Sputterätzen, im Vakuum bearbeitet. Als Ionenstrahl wird beispielsweise ein Argon-Ionenstrahl mit einem Durchmesser von ca. 1 mm verwendet.

Proben für die Elektronenmikroskopie können mittlerweile auf verschiedene Art präpariert werden. Es sind heute insbesondere drei Verfahren bekannt für die Bearbeitung von Proben mit Ionenstrahlätzen.

Das Ionenstrahl - Böschungsätzen ist ein Verfahren, das seit längerer Zeit zur Herstellung von Querschnittsproben für die Rasterelektronenmikroskopie (REM) genutzt wird. Bei diesem Verfahren wird ein Teil der Probenoberfläche mit einer Maske abgedeckt. Der nicht abgedeckte Teil der Oberfläche wird ionengeätzt, bis eine Art Böschung entsteht. An dieser Böschung kann die Querschnittsstruktur der Probe untersucht werden. Die erzielten Schnittiefen liegen im Bereich von wenigen 2.0 *µ*m bis maximal 50 *µ*m. Die Präparationszeiten variieren je nach Material und Ätztiefe zwischen einigen Minuten und mehreren Stunden. Um eine gleichmässig abgetragene Schnittfläche zu erhalten, muss die Probe während des Ätzens oszillieren. Das gilt besonders für strukturierte Materialien mit stark unterschiedlichen Sputterraten, wie sie in der Halbleiterindustrie vorkommen. Die momentan bekannten verwendeten Verfahren und Techniken zur Herstellung eines Böschungsschnittes verwenden nur eine einzelne Ionenquelle bzw. einen einzelnen Ionenstrahl.

Die zunehmenden Anforderungen besonders aus dem Bereich der Mikroelektronik gehen in Richtung grosser Schnittiefen von bis zu einem mm oder mehr bei gleichzeitig kurzer Präparationszeit und exzellenter Präparationsqualität, welche mit diesem bekannten Verfahren nicht erreicht werden kann.

Ein weiteres bekanntes Präparationsverfahren ist das sogenannte Drahtabschattungsverfahren. Das Verfahren der Drahtabschattung wird zur Herstellung von TEM-Proben mit extrem grossen elektronentransparenten Bereichen (mehrere mm lang) genutzt (Patent EP 1 505 383 A1). Hierbei wird ein dünner Draht bzw. eine Faser auf die Oberfläche der zu ätzenden Probe geklebt und diese mit einer konventionellen Ionenquelle senkrecht zur Oberfläche beschossen. Durch die Abschattung des Drahtes entsteht eine keilförmige Probe, die an der dünnsten Stelle elektronentransparent ist. Die Dicke der Proben wird zuvor mechanisch auf ca. 100 µm reduziert. Um Ätzselektivitäten im Probenmaterial zu vermeiden, oszilliert die Probe während des Ätzprozesses. Auch bei diesem Verfahren gehen die Anforderungen in Richtung hoher Ätztiefen bei gleichzeitig geringer Ätzzeit und exzellenter Probenqualität.

Diese Anforderungen sind mit der momentanen Ätztechnik sowohl für das Böschungsschnittverfahren als auch für die Drahtabschattung nicht zu erfüllen.

Ein weiteres bekanntes und verbreitetes Präparationsverfahren ist die TEM-Standard Präparation. Bei der Ionenstrahlpräparation von TEM-Standard-Proben wird eine mechanisch vorpräparierte Probe von ca. 3mm Durchmesser und ca. 20 bis 50 µm Dicke entweder mit zwei Ionenquellen von einer Probenseite her, oder jeweils je einer Ionenquelle auf jeder Probenseite, als auf der vorderen und hinteren Seite gleichzeitig geätzt. Während dem Ätzvorgang rotiert oder oszilliert die Probe, um Ätzstrukturen zu vermeiden. Alternativ kann auch der Ionenstrahl relativ zur Probe bewegt werden oder beides. Auch bei diesem Verfahren sind die Anforderungen in Richtung hoher Ätztiefe bei gleichzeitig geringer Ätzzeit und exzellenter Probenqualität nicht, oder nur mit grossem Aufwand, zu realisieren.

Die Patentschrift US 6,914,244 bezieht sich auf ein Ionenstrahl - Ätzsystem zur Herstellung von Proben für die Elektronenmikroskopie nach dem Drahtabschattungsverfahren. Hierbei werden zwei Ionenquellen eingesetzt deren Ionenstrahlen auf die zu ätzende Probe geführt werden. Die Verwendung von zwei Ionenquellen soll die Abtragungsrate erhöhen. Um eine gleichmässige Abtragung zu erzielen wird die Probe rotierend gegenüber den Ionenstrahlen bewegt, wobei auch die Ionenstrahlen bewegt werden können.

In der Patentschrift US 5,472,566 wird eine Anordnung mit einem Probenhalter beschrieben, welche es ermöglicht die TEM - Proben beidseitig mit Ionenstrahlen zu ätzen unter Verwendung einer Probenrotation. Hierzu werden je ein Ionenstrahl schräg auf die Oberseite und auf die Unterseite der Probenoberflächen gerichtet.

Die Patentschrift US 5,009,743 beschreibt eine Ionenstrahlätzanlage mit zwei Ionenquellen, deren Strahlen unter sehr flachem Winkel von 0 bis 10 Grad auf die Probenoberfläche geführt wird, wobei die Ionenquellen symmetrisch gegenüber der Probe und einander gegenüber liegend angeordnet sind. Auch ist offenbart, dass ein Ionenstrahl von der Unterseite und der andere von der Oberseite auf die Probe gerichtet sein kann zur doppelseitigen Abtragung der Probe.

Der Erfindung liegt die Aufgabe zugrunde, die Nachteile des Standes der Technik zu beseitigen. Es soll insbesondere ein Ätzverfahren realisiert werden, welches hohe Schnittiefen bei kurzer Präparationszeit ermöglicht, mit welchem bei hoher Zuverlässigkeit und guter erreichbarer Probenqualität eine hohe Wirtschaftlichkeit erreicht werden kann.

Die Aufgabe wird erfindungsgemäss durch Vorgehen nach dem Verfahren nach Anspruch 1 gelöst. Die abhängigen Ansprüche definieren weitere vorteilhafte Verfahrensschritte.

Erfindungsgemäss werden elektronenmikroskopische Proben mit mindestens drei örtlich fest angeordneten Ionenstrahlen geätzt, welche unter einem Winkel auf die Probenoberfläche gerichtet sind und sich dort treffen. Die Proben werden hierbei ebenfalls nicht bewegt, so dass keine Relativbewegung zwischen den Ionenstrahlen und der Probe vorhanden ist, womit die ganze Anordnung stationär angeordnet betrieben wird.

einem Festkörpermaterial geschnitten, beispielsweise mechanisch. Eine zusätzliche chemische und / oder mechanische Behandlung ist möglich: Danach wird eine an der Probe ausgebildete Probenoberfläche mit einem Ionenstrahl unter einem vorgegebenen Einfallswinkel derart behandelt, dass Material von der Probenoberfläche durch Ionenätzen abgetragen wird bis an der Probe, im Bereich der Auftreffzone des Ionenstrahles, die gewünschte Beobachtungsoberfläche freigelegt ist, welche anschliessend die Betrachtung im gewünschten Bereich der Probe mit einem Elektronenmikroskop ermöglicht, wobei mindestens drei feststehende Ionenstrahlen unter einem vorgegebenen Winkel zueinander ausgerichtet auf die Probenoberfläche geführt werden, derart dass sich die Ionenstrahlen an der Probenoberfläche zumindest berühren oder schneiden und dort eine Auftreffzone bilden, und dass sowohl die Probe, wie auch die Ionenstrahlen nicht bewegt und somit stationär betrieben werden.

Das vorliegende Ätzverfahren ermöglicht die ruhende Probe während des Ätzvorganges in hoher Auflösung mit einem Beobachtungsmittel zu betrachten und somit den Vorgang zu kontrollieren, vorzugsweise mit einem Lichtmikroskop oder einem Rasterelektronenmikroskop. Diese Beobachtung sollte mindestens zeitweise erfolgen über den Verlauf des gesamten Ätzvorganges.

Die Probe wird mit Vorteil vor dem Ionenätzen gegenüber dem Beobachtungsmittel ausgerichtet und während dem Ätzvorgang nicht mehr bewegt.

Die Probe kann während dem Ätzvorgang zusätzlich gekühlt werden , insbesondere, um noch höhere Strahlleistungen zulassen zu können, welche in der Folge noch höhere Ätzgeschwindigkeiten ermöglichen, auch bei sehr empfindlichen Proben.

Damit ist es möglich hohe Schnittiefen bei kurzer Präparationszeit zu erreichen. Es wird eine hohe Oberflächenqualität erzielt und Ätzselektivitäten werden gering gehalten oder vermieden. Die Bedingungen hierzu können optimal gewählt und an der Anordnung eingestellt werden, beispielsweise durch die Wahl des Winkels zwischen den Ionenstrahlen, des Auftreffwinkels der Ionenstrahlen auf der Probenoberfläche, gleicher oder verschiedener Energie der Strahlen, Strahldurchmesser, Strahlstromdichte und Lage der Strahlen im Auftreffbereich der Probe. Die Werte können einzeln und / oder in Kombination vorgegeben, eingestellt oder variiert werden. Auch können die Werte nach vorgegebenem Programm, beispielsweise mit einer automatisierten Steuerung, abhängig vom Fortschritt des Ätzvorganges variiert oder nachgeführt werden. Mit Vorteil werden für eine TEM - Probe mindestens drei feststehende Ionenstrahlen verwendet, diese müssen nicht in einer Ebene liegen. Für Proben nach dem Böschungsätzverfahren oder dem Drahtabschattungsverfahren werden auch bereits mit drei feststehenden Ionenstrahlen günstige Ergebnisse erzielt. Drei oder mehr Ionenstrahlen bringen noch bessere Ergebnisse und es ist dann vorteilhaft, wenn diese drei oder mehr Ionenstrahlen in einer einzelnen Ebene liegend an die Probe geführt werden.

Für die Präparation von beispielsweise Solder Balls ist das Böschungsätzen sehr geeignet. Bei derartigen Strukturen führt die Anwendung einer Oszillationsbewegung, entsprechend den bekannten Verfahren, durch die unterschiedlichen auftretenden Beschusswinkel bei der Oszillation zu einem sehr unerwünschten "Tunneleffekt". Das kann durch Vorgehen gemäss der Erfindung, durch den Einsatz von mehreren feststehenden Ionenstrahlen und allenfalls zusätzlich durch den Einsatz von unterschiedlichen Energien der einzelnen Ionenstrahlen nun gut unterdrückt werden.

Die Ionenstrahlen können für jeden Strahl mit einer eigenen Ionenquelle erzeugt werden oder es können auch mit Vorteil mindestens zwei Ionenstrahlen mit einer einzelnen Ionenquelle erzeugt werden, indem diese aus einer gemeinsamen Quellenanordnung, wie einem Plasma, durch Extraktion erzeugt werden.

In einem bevorzugten Ausführungsbeispiel werden drei Ionenquellen, in einem Gehäuse integriert, in einem Winkel von jeweils 60° zueinander angeordnet. Die Ionenstrahlen bilden einen Schnittpunkt, der auf einen ausgewählten Punkt bzw. einer Auftreffzone auf der Probenoberfläche gerichtet werden kann. Die Strahlen bilden einen Kreissektor von 60° bis 120°. Die Strahlen müssen hierbei aus verschiedenen Richtungen auf die Probenoberfläche treffen, so dass ein Winkel von 0° bis 180°, vorzugsweise 20° bis 160° bezüglich der Probenoberfläche entsteht, abhängig vom Anwendungsfall, (Ätztiefe oder Ätzbreite) und dass ein Schnittpunkt der Einzelstrahlen auf einer wählbaren Auftreffzone auf der Probe entsteht. Der Kreissektor kann durch zwei oder mehr Strahlen gebildet werden. Dies kann durch mehrere Ionenstrahlen, extrahiert aus einer oder mehreren Ionenquellen, realisiert werden. Der Winkel des Kreissektors beeinflusst die Schnittgeschwindigkeit bzw. die Oberflächenqualität.

Bei einem weiteren bevorzugten Ausführungsbeispiel für das Böschungsätzverfahren werden drei jeweils um 60° versetzte Ionenquellen, die einen Kreissektor bilden (60° bis 120°) verwendet. Mit der Einstellung der Winkelgrösse können unterschiedliche Resultate erreicht werden und dadurch je nach Wunsch eingestellt werden. Ein kleinerer Winkel, beispielsweise von 60° bis 120°, führt zu einer höheren Schnittgeschwindigkeit, aber andererseits besonders bei Proben mit hoher Ätzselektivität, zu stärker ausgebildeten Vorzugsrichtungen.

Die Ionenenergie der Strahlen liegt im Bereich von 200 eV bis 12 keV, vorzugsweise im Bereich von 500 eV bis 8 keV. Die Ionenenergie der Einzelquellen kann variiert werden, um bestimmte Ätzprofile zu erreichen.

Durch das Berühren und / oder Überlappen der einzelnen Ionenstrahlen aus verschiedenen Richtungen in einem Schnittbereich an der Auftrefffläche der Probenoberfläche wird der oben genannte Beschusssektor gebildet, der eine Rotation der Probe zur Vermeidung von Vorzugsrichtungen unnötig macht. Die Position des Schnittbereichs kann justiert, oder gar geregelt, werden, auch während dem Ätzprozess. Dadurch ist der Einfluss des Profils des Einzelstrahles geringer und das Verfahren ist weniger kritisch in den Einstellungen, womit die Zuverlässigkeit erhöht ist.

Ionenenergie und Stromdichte sind beispielsweise auch in Abhängigkeit von der thermischen Empfindlichkeit der Probe wählbar. Das vorgestellte Verfahren ermöglicht somit durch die gezielte Einstellbarkeit von wichtigen Parametern einen hohen Grad an Flexibilität bei der Prozessführung, womit eine Anpassung an die verschiedensten Proben leicht möglich ist und dies bei hoher Prozessproduktivität.

Die Erfindung wird nun nachfolgend beispielsweise und anhand von schematischen Zeichnungen näher erläutert. Es zeigen:
- Fig. 1: Eine Probe in dreidimensionaler Darstellung für das Böschungsätzen mit drei Ionenstrahlen in einer Ebene liegend gemäss der Erfindung;
- Fig. 2: Eine Probe in dreidimensionaler Darstellung für eine TEM Standardprobe mit beidseitigem Ätzen mit jeweils drei Ionenstrahlen gemäss der Erfindung;
- Fig. 3: Eine Probe in dreidimensionaler Darstellung für das Drahtabschattungsverfahren mit drei Ionenstrahlen in einer Ebene liegend gemäss der Erfindung, wobei ein Ionenstrahl senkrecht,zur Probenoberfläche auftrifft;
- Fig. 4: Eine Probe in dreidimensionaler Darstellung entsprechend der Figur 3 in gedrehter Ansicht und nicht senkrecht auftreffendem Ionenstrahl;
- Fig. 5a-c: Im Querschnitt Ionenstrahlen in einer Ebene liegend unter verschiedenen möglichen Winkeln zueinander und unterschiedlichen möglichen Auftreffwinkeln auf die Probenoberfläche;
- Fig. 6a-c: Im Querschnitt Ionenstrahlen auf einer Kegelfläche liegend unter verschiedenen möglichen Winkeln zueinander und unterschiedlichen möglichen Auftreffwinkeln auf die Probenoberfläche;
- Fig. 7a-d: In der Aufsicht zur Probenoberfläche verschiedene mögliche Formen der Auftreffzone für mehrere Ionenstrahlen bei Berührung und / oder Überlappung in einer Linie liegend bei Ionenstrahlen, die in einer Ebene liegen; Probenoberfläche
- Fig. 8a-d: In der Aufsicht zur verschiedene mögliche Formen der Auftreffzone für mehrere Ionenstrahlen bei Berührung und / oder Überlappung bei Ionenstrahlen, die nicht in einer Ebene liegen, beispielsweise auf einer Kegelmantelfläche.

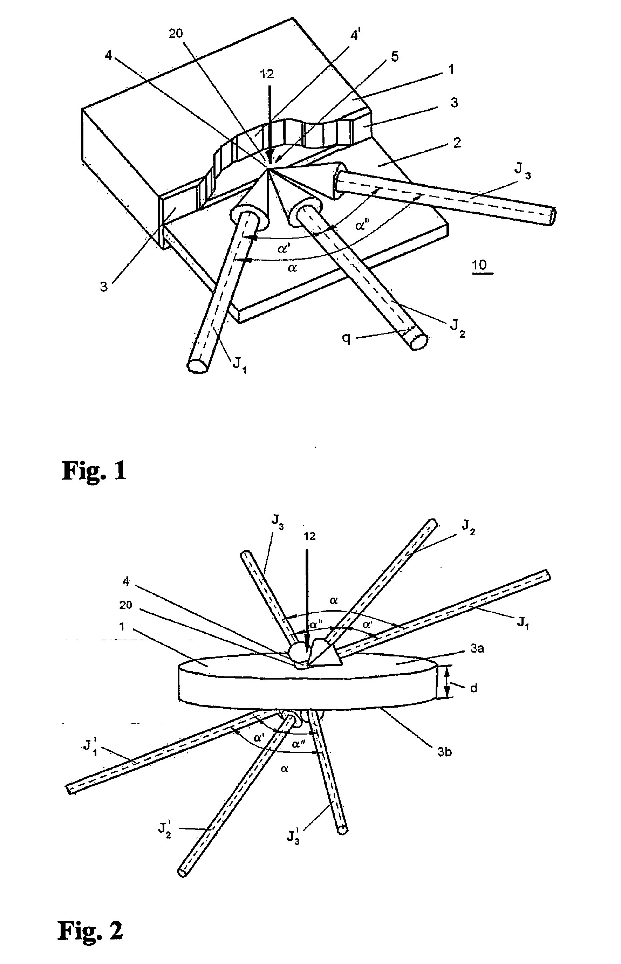

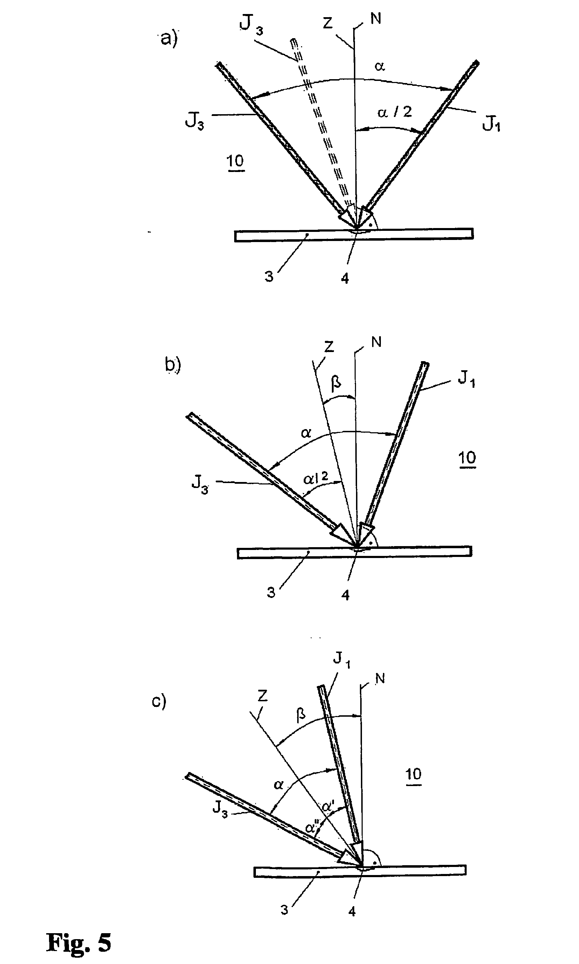

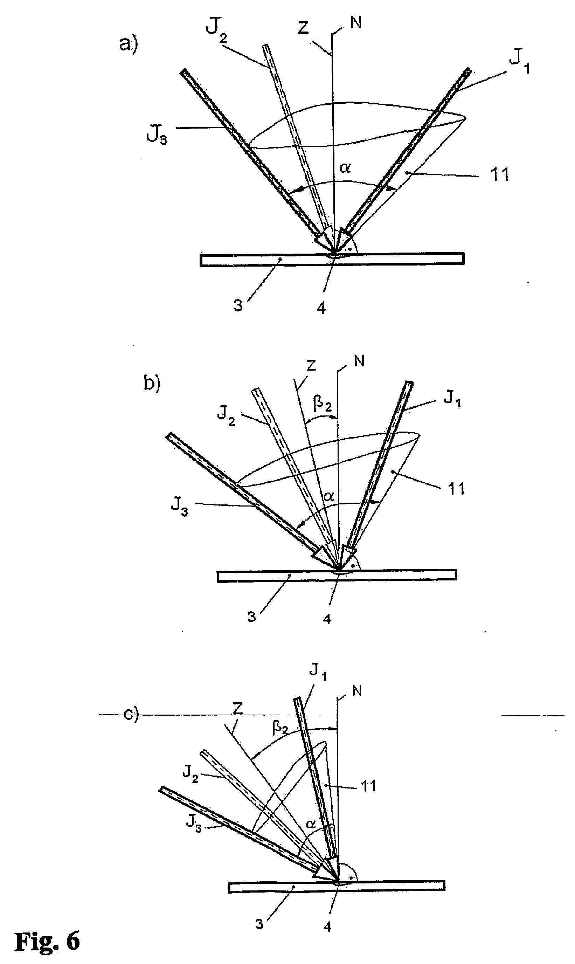

Ein flacher Probenkörper 1 wird beispielsweise mit einem Diamantwerkzeug aus dem zu untersuchenden Material geschnitten und beidseitig mechanisch poliert. Die Probe 1 weist dann zwei Seiten auf mit den zwei Oberflächen 3a und 3b und der Dicke d, wie dies in Figur 2 dargestellt ist. Dies ist eine typische Probe, wie sie für TEM - Beobachtungen mit der Beobachtungsrichtung 12 des Elektronenmikroskopes üblich ist und auch nach dem TEM - Standardätzverfahren mit nur einem Ionenstrahl behandelt wird, bei welchem die Probe 1 oder der Ionenstrahl bewegt wird. Erfindungsgemäss wird nun die Probenoberfläche 3 auf einer Seite oder auf beiden Seiten 3a, 3b gleichzeitig mit mindestens drei Ionenstrahlen J₁, J₂, J'₁, J'₂ geätzt, welche sich in der Auftreffzone 4 der Probenoberfläche 3 berühren oder überlappen. Die Anordnung wird stationär betrieben, es wird somit weder die Probe 1 noch die Ionenstrahlen J relativ zueinander bewegt. Noch bessere Ergebnisse werden erzielt, wenn mindestens drei Ionenstrahlen J₁, J₂, J₃ eingesetzt werden und diese sich alle in der Auftreffzone 4 berühren und / oder überlappen. Die drei Ionenstrahlen J werden unter einem Winkel α auf die Probenoberfläche 3 geführt. Diese bilden somit eine Art Kreissegment und spannen eine Ebene 10 auf. Wenn beispielsweise drei Ionenstrahlen J bis J₃ verwendet werden unter den zueinander liegenden Winkeln α, α', α" können diese in einer einzelnen Ebene 10 (Fig. 5a) angeordnet werden oder auf einer Kegelmantelfläche 11 oder wenn mehr als drei Ionenstrahlen verwendet werden können einzelne Ionenstrahlen J auch innerhalb des Kegels positioniert werden (Fig. 6). Die Kegelspitze in welcher die Ionenstrahlen J alle zusammengeführt werden trifft, liegt jeweils im Bereich der Auftreffzone 4 an der zu ätzenden Probenoberfläche 3. Die Ebene 10 und / oder der Kegel 11 mit ihrer Zentrumsachse Z, Z' können senkrecht zur der Probenoberfläche 3 ausgerichtet sein oder um einen Winkel β gegenüber der Normalen N der Probenoberfläche 3 verkippt angeordnet sein, wie dies auch in den Figuren 5 und 6 schematisch dargestellt ist. Sobald die gewünschte zu prüfende Probendicke bzw. abgeätze Oberfläche mit der Auftreffzone 4' erreicht ist, kann der Ätzvorgang beendet werden, und es kann die Probe 1 mit dem TEM in der Beobachtungsrichtung 12 in hoher Auflösung betrachtet werden. Die Beobachtungsrichtung 12 führt auf die Beobachtungsoberfläche 20 welche mit der abgeätzten Probenoberfläche 3 und somit mit der Auftreffzone 4' der Ionenstrahlen J am Ende des Ätzvorganges identisch ist.

Eine Anordnung mit einer Probe 1 ist für das Böschungsätzverfahren schematisch in Figur 1 dargestellt. Das vorliegende Verfahren eignet sich besonders gut für das aufwendigere und heiklere Böschungsätzverfahren. Die Probe 1 wird aus dem zu untersuchenden Material herausgeschnitten. An eine gewählte Probenoberfläche 3 wird eine plane Maske 2 herangeführt dessen Fläche mit Vorteil senkrecht zur Probenoberfläche angeordnet wird. Die Maske ist von der Probenoberfläche 3 etwas beabstandet angeordnet, die in einem Abstand im Bereich von 10 µm bis 100 µm anschliesst und dadurch die beiden Oberflächen in diesem Bereich eine angrenzende Linie bilden. In den Bereich dieser Linie wird die Auftreffzone 4 der mindestens drei, vorzugsweise drei, Ionenstrahlen J₁, J₂, mit ihrem Strahldurchmesser q, gelegt. Die Ionenstrahlen J liegen in einer Ebene 10 und die Ebene führt durch diese Linie. Diese Ebene 10 mit den Ionenstrahlen wird mit Vorteil senkrecht zur Probenoberfläche 3 positioniert und kann zur Oberfläche der Maske 2 parallel liegen. Die Ebene 10 kann gegenüber der Oberfläche der Maske 2 auch leicht verkippt angeordnet werden um einen Winkel im Bereich von 0° bis 10°, vorzugsweise von 0° bis 5°. Dadurch kann je nach zu behandelndem Probenmaterial und dem gewünschten zu betrachtenden Ergebnis der Ätzvorgang optimal eingestellt werden.

Durch den nun folgenden Ätzvorgang, beginnend an der Auftreffzone 4 der ursprünglichen Probenoberfläche 3 wird das Material bevorzugt in der Richtung der Ionenstrahlen J von der Probe 1 abgetragen, wodurch eine Art Graben entsteht mit der nun tiefer liegenden Auftreffzone 4'. Die Auftreffzone 4, 4' verschiebt sich somit , abhängig zum Fortschritt des Ätzvorganges. Seitlich zur Ebene 10 und somit seitlich zu den Ionenstrahlen innerhalb der Probe 1 wird ebenfalls durch streifende bzw. streuende Ionen leicht geätzt und es entsteht eine sogenannte Böschung 5 am gewünschten zu betrachtenden Ort welche die erzeigte Beobachtungsfläche 20 bildet. Bei einer derartigen Probe wird die Beobachtungsrichtung 12 für das REM, mit Vorteil, in senkrecht zur seitlichen Probenoberfläche und insbesondere zur Beobachtungsfläche 20 ausgerichtet.

Bei dieser bevorzugten Anwendung werden die Ionenstrahlen J alle in einer Ebene 10 ausgerichtet. Diese können verschiedene Winkel α, α', α" einschliessen und bilden somit eine Art Kreissegment. Das aufgespannte Kreissegment schliesst hierbei mit Vorteil einen Winkel α ein der im Bereich von 10° bis 180° liegt, vorzugsweise im Bereich von 30° bis 140° und alle Ionenstrahlen liegen in der durch diese aufgespannten Ebene 10 dieses Kreissegmentes. Je nach Anzahl der Ionenstrahlen liegen auch weitere Ionenstrahlen innerhalb des Kreissegmentes welches abgeschlossen wird durch die zwei Ionenstrahlen, die den grössten Winkel einschliessen und das Kreissegment begrenzen. Die Ionenstrahlen können symmetrisch oder asymmetrisch zu einer Senkrechten N zur Probenoberfläche ausgerichtet werden, wie dies schematisch in den Figuren 5a bis 5c dargestellt ist. Das derart gebildete Kreissegment mit der Zentralachse Z kann auch zusätzlich gegenüber dieser Senkrechten N um einen Winkel β verkippt werden zur weitere Einstellung von gewünschten Ätzbedingungen. Der Winkel β liegt hier mit Vorteil im Bereich von ± 20°, vorzugsweise im Bereich von ± 10°.

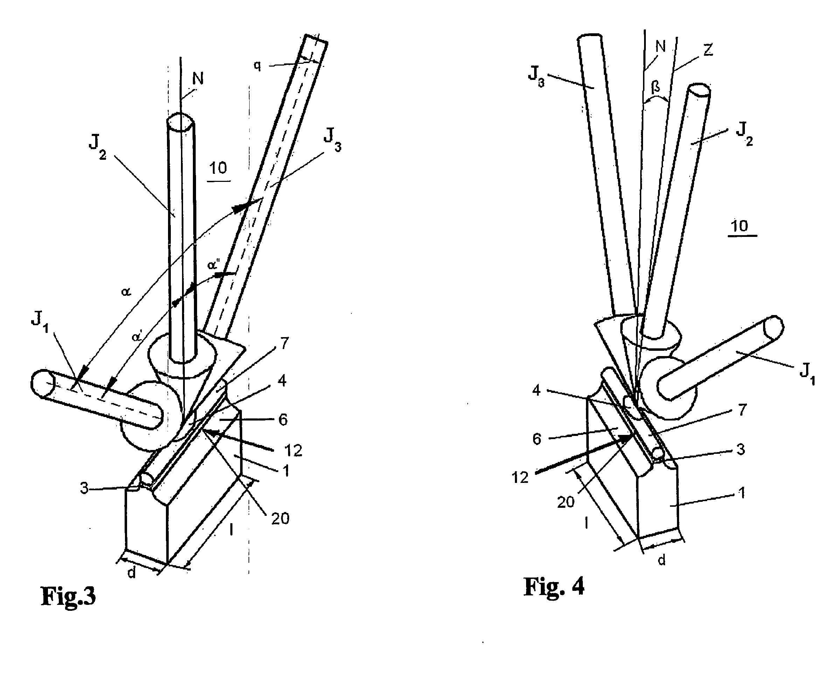

In den Figur 3 und 4 ist eine Anordnung nach dem Drahtabschattungsverfahren dargestellt, welches ebenfalls eine bevorzugte Präparationsart darstellt für das vorliegende Verfahren. Die Figuren zeigen zwei verschieden Ansichten in welchen die Probe 1, zur besseren Übersicht leicht gedreht dargestellt ist.

mit der Länge l und der Breite d. Wenn es sich um eine Probe handelt, die aus einem Mikroelektronikwafer geschnitten ist, weist diese Probe 1 oft eine strukturierte Oberfläche 3 auf, welche zusätzlich Beschichtungen oder Schichtsysteme enthalten können (nicht gezeigt). Ein Draht oder eine Faser 7 mit kleinem vorgegebenen Durchmesser ist auf der Probenoberfläche 3, beispielsweise mit einem Klebstoff, fixiert. Es ist üblich eine Probenbreite d von etwa 100 µm zu wählen oder geringer bis 10 µm die zu applizierende Faser ist im Durchmesser kleiner als die Probenbreite d und bildet eine Maske. Gemäss vorliegender Erfindung werden nun mindestens drei, vorzugsweise drei, Ionenstrahlen J, vorzugsweise senkrecht zur Probenoberfläche 3, auf die Faser 7 gerichtet wo dann die Auftreffzone 4 liegt. In diesem Fall liegt die Senkrechte N innerhalb der Ebene 10. Die Ebene 10 wird parallel zur Richtung des Drahtes gelegt oder führt gar durch die Drahtachse.

Nach einer gewissen Ätzzeit bilden sich durch den Materialabtrag der Probe 1 beidseitig zur Probe 1 Flanken 6 aus, welche am Ende des Ätzvorganges die Beobachtungsoberfläche 20 für das TEM bilden. Es ist auch erkenntlich, dass eine kammartige Zuspitzung der Probe ausgebildet wird, wie dies aus den Figuren 3 und 4 ersichtlich ist. Die Probe 1 wird derart stark abgeätzt durch die Ionenstrahlen J, dass eine eindeutige keilförmige Ausbildung quer zu ihrer Länge l vorliegt. Die geätzten Flanken 6 beidseits der Probe 1 schliessen nun einen länglichen Kamm ein, der spitz zuläuft und in diesem Bereich elektronendurchlässig ist für eine TEM - Betrachtung welche von der Seite der Probe, vorzugsweise in senkrechter Beobachtungsrichtung 12 erfolgt, welches mit einem Pfeil quer zur Probenlängsrichtung dargestellt ist. Die Faser 2 ist in diesem Zustand ebenfalls stark abgeätzt.

Auch hier wird durch die Ionenstrahlen, wie zuvor beim Böschungsätzen beschrieben, eine Art Kreissegment gebildet innerhalb der Eben 10 und die Ionenstrahlen können unter verschiedenen Winkeln auf die Probenoberfläche 3 gerichtet auftreffen oder als ganzes verkippt angeordnet sein. Das aufgespannte Kreissegment schliesst hierbei mit Vorteil einen Winkel α ein der im Bereich von 10° bis 180° liegt, vorzugsweise im Bereich von 30° bis 140° und alle Ionenstrahlen liegen in der durch diese aufgespannten Ebene 10 dieses Kreissegmentes. Je nach Anzahl liegt, vorzugsweise im Bereich von 30° bis 140° und alle Ionenstrahlen liegen in der durch diese aufgespannten Ebene 10 dieses Kreissegmentes. Je nach Anzahl der Ionenstrahlen liegen auch weitere Ionenstrahlen innerhalb des Kreissegmentes welches abgeschlossen wird durch die zwei Ionenstrahlen, die den vorerwähnten grössten Winkel einschliessen und das Kreissegment begrenzen.

Die Ionenstrahlen können symmetrisch oder asymmetrisch zu einer Senkrechten N zur Probenoberfläche ausgerichtet werden, wie dies schematisch in den Figuren 5a bis 5c dargestellt ist. Das derart gebildete Kreissegment mit der Zentralachse Z kann auch zusätzlich gegenüber dieser Senkrechten N um einen Winkel β verkippt werden zur weitere Einstellung von gewünschten Ätzbedingungen. Der Winkel β wird hier mit Vorteil im Bereich von ± 20°, vorzugsweise im Bereich von ± 10° liegend gewählt.

In den Figuren 5a bis 5b sind verschiedene mögliche Lagen und Einfallsrichtungen von Ionenstrahlen J, die in einer gemeinsamen Ebene (10) liegend gegenüber der Probenoberfläche geführt werden, schematisch dargestellt. In Figur 5a liegt das durch zwei Ionenstrahlen J₁, J₂ unter dem Winkel α begrenzte Kreissegment mit seiner zentralen Symmetrieachse Z auf der Senkrechten N zur Probenoberfläche 3 auf welcher die Auftreffzone 4 für alle Ionenstrahlen J liegt und in welche diese in einer Art Schnittpunkt zusammengeführt sind. Bei dieser symmetrischen Anordnung sind die beiden Ionenstrahlen J₁, J₂ gegenüber der Zentralachse Z bzw. der Senkrechten N um den Winkel α/2 in Richtung Auftreffzone geführt. Bei Einsatz eines dritten Ionenstrahles J₃ liegt dieser innerhalb des Kreissegmentes mit den Winkeln α' und α" gegenüber den das Kreissegment einschliessenden beiden äussersten Ionenstrahlen J₁, J_{2.} Weitere Ionenstrahlen können innerhalb des Kreissegmentes liegen.

Das Kreissegment mit der Zentralachse Z kann gegenüber der Senkrechten N um einen Winkel β verkippt angeordnet sein, also eine entsprechende Asymmetrie aufweisen, wie dies in der Figur 5b dargestellt ist. Eine Verkippung in welcher alle Ionenstrahlen auf einer Seite der Senkrechten N zu liegen kommen ist in Figur 5c Für die Anordnung von mindestens drei Ionenstrahlen J für die Bearbeitung der Stadard - TEM - Proben, die nicht in einer Ebene 10 liegen, werden die drei Ionenstrahlen J1-J3 unter entsprechenden Winkeln α auf einer Kegelmantelfläche 11 liegend geführt, dessen Spitze in der Auftreffzone 4 liegt, wie dies in den Figuren 6a bis 6c dargestellt ist. Die Möglichkeiten der Verkippung der ganzen Anordnung um den Winkel β der Kegelzentralachse Z sind analog zur vorhergehenden Ausbildung in einer Ebene gemäss den Figuren 6a bis 6c. Bei mehr als drei Ionenstrahlen liegen, diejenigen mit den kleineren Winkelabweichungen innerhalb des Kegels.

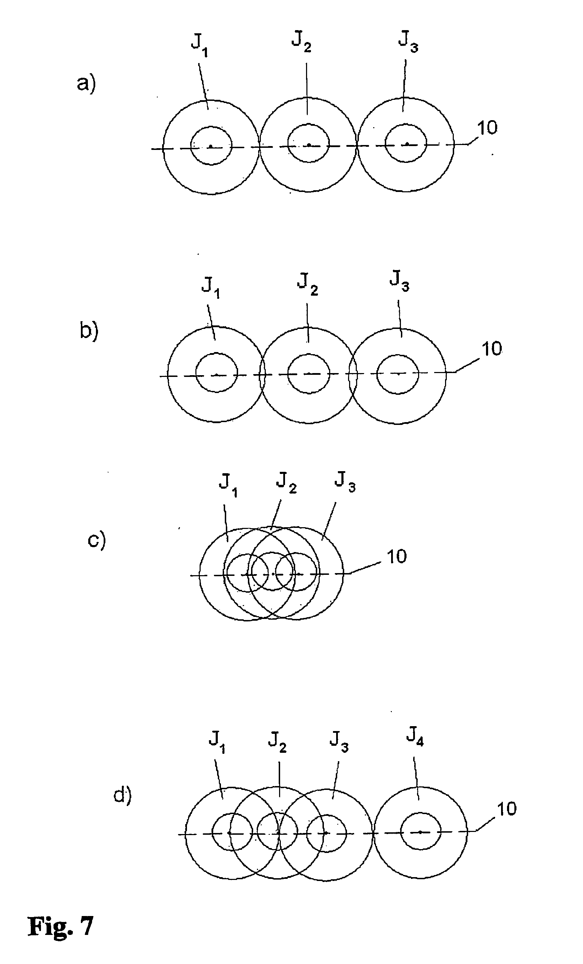

Verschiedene Zusammenführungen der mindestens drei Ionenstrahlen J im Bereich der Auftreffzone 4 sind in den Figuren 7a bis 7d in Aufsicht dargestellt. Die Ionenstrahlen mit ihrem Querschnitt q liegen alle in derselben Ebene 10 und berühren sich in der Auftreffzone zumindest entsprechend der Darstellung in Figur 7a. Diese liegen alle in einer Linie innerhalb de Ebene 10 welche die Auftreffzone 4 schneidet. Sie können sich einzeln überlappen gemäss Figur 7b oder alle überlappen gemäss Figur 7c oder berühren und überlappen gemäss Figur 7d.

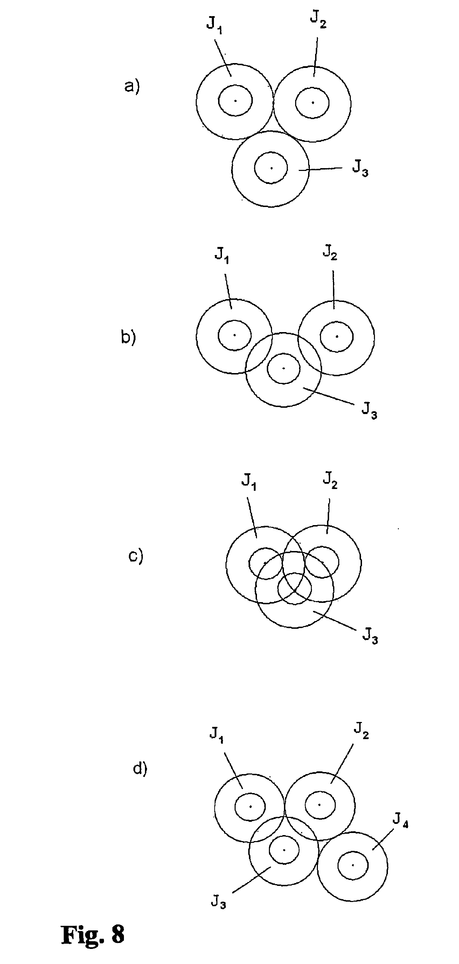

Die Zusammenführung von mindestens drei Ionenstrahlen J innerhalb einer Auftreffzone 4 für Ionenstrahlen J, die mindestens auf einer Kegelmantelfläche und /oder auch dazwischen liegen ist in den Figuren 8a bis 8d dargestellt. Figur 8a zeigt drei sich berührende Ionenstrahlen J₁ bis J₃ in der Auftreffzone 4. Drei teilweise überlappende Ionenstrahlen sind in Figur 8b gezeigt. Drei überlappende Ionenstrahlen sind in Figur 8c dargestellt und vier Ionenstrahlen überlappend und berührend in der Figur 8d.

## Patentansprüche

1. Verfahren zur Herstellung einer Probe (1) für die Elektronenmikroskopie, die aus einem Festkörpermaterial geschnitten wird mit einer daran ausgebildeten Probenoberfläche (3) welche mit einem Ionenstrahl (J) unter einem vorgegebenen Einfallswinkel derart behandelt wird, dass Material von der Probenoberfläche (3) durch Ätzen abgetragen wird bis an der Probe (1) im Bereich der Auftreffzone (4) des Ionenstrahles (J) die gewünschte Beobachtungsoberfläche (20) freigelegt ist, welche die Betrachtung (12) im gewünschten Bereich der Probe (1) mit einem Elektronenmikroskop ermöglicht, **dadurch gekennzeichnet, dass** mindestens drei feststehende Ionenstrahlen (J₁, J_{2,} J₃) unter einem vorgegebenen Winkel (α) zueinander ausgerichtet auf die Probenoberfläche (3) geführt werden, derart dass sich die Ionenstrahlen (J₁, J_{2,} J₃) an der Probenoberfläche (3) zumindest berühren oder schneiden und dort eine Auftreffzone (4) bilden, und dass sowohl die Probe (1), wie auch die Ionenstrahlen (J₁, J_{2,} J₃) nicht bewegt und somit stationär betrieben werden.

2. Verfahren nach Anspruch 1, **dadurch gekennzeichnet, dass** die Probe (1) nach dem Böschungsätzverfahren mit den Ionenstrahlen (J₁, J₂ J₃) behandelt wird.

3. Verfahren nach Anspruch 1, **dadurch gekennzeichnet, dass** die Probe (1) nach dem Drahtabschattungsverfahren mit den Ionenstrahlen (J₁, J₂, J₃) behandelt wird.

4. Verfahren nach Anspruch 1, **dadurch gekennzeichnet, dass** eine Standard - TEM Probe (1) mit den Ionenstrahlen (J₁, J₂) behandelt wird, indem die mindestens je drei Ionenstrahlen (J₁, J₂) mindestens auf eine der Probenseiten (3a, 3b) gerichtet werden zur Abtragung der Probenoberfläche (3a, 3b).

5. Verfahren nach einem der vorhergehenden Ansprüche, **dadurch gekennzeichnet, dass** mehrere nicht bewegte Ionenstrahlen (J₁, J₂), vorzugsweise drei, unter verschiedenen Winkeln (α, α', α") auf die Probenoberfläche (3) geführt werden und sich dort alle in der Auftreffzone (4) zumindest berühren, oder vorzugsweise mindestens teilweise überlappen.

6. Verfahren nach einem der vorhergehenden Ansprüche, **dadurch gekennzeichnet, dass** die gegenseitige Lage der Ionenstrahlen (J₁, J₂) in der Auftreffzone (4) und somit der Grad der Überlappung für mindestens einen Ionenstrahl einstellbar ist, vorzugsweise während dem Ätzvorgang.

7. Verfahren nach einem der vorhergehenden Ansprüche, **dadurch gekennzeichnet, dass** mindestens zwei der Ionenstrahlen (J₁, J₂) mit einer einzelnen Ionenquelle gemeinsam erzeugt werden.

8. Verfahren nach einem der vorhergehenden Ansprüche, **dadurch gekennzeichnet, dass** mindestens zwei der Ionenstrahlen (J₁, J₂) mit je einer eigenen Ionenquelle erzeugt werden.

9. Verfahren nach einem der vorhergehenden Ansprüche, **dadurch gekennzeichnet, dass** die ruhende Probe (1) während des Ätzvorganges in hoher Auflösung mit einem Beobachtungsmittel, vorzugsweise einem Lichtmikroskop oder einem Rasterelektronenmikroskop mindestens zeitweise beobachtet wird.

10. Verfahren nach Anspruch 2, **dadurch gekennzeichnet, dass** beim Ionenstrahlböschungsätzen eine Maske (2) mit einer planen Oberfläche verwendet wird, welche an der Probenoberfläche (3) mit einem Abstand im Bereich von 10 µm bis 100 µm anschliesst und dadurch die beiden Oberflächen in diesem Bereich eine angrenzende Linie bilden in dessen Bereich die Auftreffzone (4) der Ionenstrahlen (J₁, J_{2,} J₃) liegt und dass die Ionenstrahlen eine Ebene (10) aufspannen in welcher die Linie liegt, wobei diese Ebene (10) gegenüber der Oberfläche der Maske (2) leicht verkippt angeordnet wird um einen Winkel im Bereich von 0° bis 10°, vorzugsweise von 0° bis 5° und dass die Oberfläche der Maske (2) vorzugsweise senkrecht zur Probenoberfläche (3) positioniert wird.

11. Verfahren nach Anspruch 2 oder 10, **dadurch gekennzeichnet, dass** die Ionenstrahlen (J₁, J_{2,} J₃) ein Kreissegment aufspannen mit dem Winkel (α) und dieser in einem Bereich von 10° bis 180° liegt, vorzugsweise im Bereich von 30° bis 140° liegt und alle Ionenstrahlen (J₁, J_{2,} J₃) in der Ebene dieses Kreissegmentes liegen.

12. Verfahren nach Anspruch 3, **dadurch gekennzeichnet, dass** beim Drahtabschattungsverfahren die Ionenstrahlen (J₁, J_{2,} J₃) in einer Ebene (10) geführt werden, die parallel zum Draht (7) liegt, wobei die Senkrechte (N) zur Probenoberfläche (3) ebenfalls in dieser Eben (10) liegt.

13. Verfahren nach Anspruch 3 oder 12, **dadurch gekennzeichnet, dass** die durch die Ionenstrahlen (J) aufgespannte Ebene (10) derart zur Senkrechten (N) angeordnet wird, dass sie einen Winkel β bilden der im Bereich von ± 20° liegt, vorzugsweise im Bereich von ± 10°.

14. Verfahren nach Anspruch 3 oder 12, **dadurch gekennzeichnet, dass** die Ionenstrahlen (J₁, J₂₋ J₃) ein Kreissegment aufspannen mit dem Winkel (α) und dieser in einem Bereich von 10° bis 180° liegt, vorzugsweise im Bereich von 30° bis 140° liegt und alle Ionenstrahlen in der Ebene dieses Kreissegmentes liegen, wobei vorzugsweise zwei Ionenstrahlen (J₁, J₂) symmetrisch zur Oberflächennormalen (N) positioniert betrieben werden.

15. Verfahren nach Anspruch 4, **dadurch gekennzeichnet, dass** die Ionenstrahlen (J₁, J₂, J₃) auf mindestens einer Seite der Probe (1) auf einem Kegelmantel (11) liegend ausgerichtet werden und die Kegelspitze die Ionenstrahlen zusammengeführt werden und auf mindestens dieser einen Probenseite auf die Auftreffzone (4) treffen.

## Claims

1. Method for production of a sample (1) for electron microscopy which is cut from a solid body material, with a sample surface (3) formed thereon which is treated with an ion beam (J) at a predefined angle of incidence, such that material is removed from the sample surface (3) by etching until on the sample (1), in the region of the impact zone (4) of the ion beam (J), the desired observation surface (20) is exposed which allows viewing (12) with an electron microscope in the desired region of the sample (1), **characterised in that** at least three fixed ion beams (J₁, J₂, J₃) are guided at a predefined angle (α) to each other onto the sample surface (3) such that the ion beams (J₁, J₂, J₃) at least touch or intersect at the sample surface (3) and there form an impact zone (4), and that both the sample (1) and the ion beams (J1, J2, J3) are not moved and are therefore operated stationary.

2. Method according to claim 1, **characterised in that** the sample (1) is treated with the ion beams (J₁, J₂, J₃) in the slope etching process.

3. Method according to claim 1, **characterised in that** the sample (1) is treated with the ion beams (J₁, J₂, J₃) in the wire shadowing process.

4. Method according to claim one, **characterised in that** a standard TEM sample (1) is treated with the ion beams (J₁, J₂) **in that** in each case at least three ion beams (J₁, J₂) are directed onto at least one of the sample sides (3a, 3b) to remove the sample surface (3a, 3b).

5. Method according to any of the preceding claims, **characterised in that** several stationary ion beams (J₁, J₂), preferably three, are guided a different angles (α, α', α") onto the sample surface (3) and there all at least touch or preferably at least partially overlap in the impact zone (4).

6. Method according to any of the preceding claims, **characterised in that** the mutual position of the ion beams (J₁, J₂) in the impact zone (4) and hence the degree of overlap can be adjusted for at least one ion beam, preferably during the etching process.

7. Method according to any of the preceding claims, **characterised in that** at least two of the ion beams (J₁, J₂) are generated jointly with a single ion source.

8. Method according to any of the preceding claims, **characterised in that** at least two of the ion beams (J₁, J₂) are generated separately each with their own ion source.

9. Method according to any of the preceding claims, **characterised in that** during the etching process, the resting sample (1) is observed for at least part of the time in high resolution with an observation means, preferably a light-optical microscope or a scanning electron microscope.

10. Method according to claim 2, **characterised in that** in ion beam slope etching, a mask (2) with a planar surface is used which connects to the sample surface (3) at a distance in the range from 10 µm to 100 µm, and thus the two surfaces in this region form a bordering line, in the region of which lies the impact zone (4) of the ion beams (J₁, J₂, J₃), and that the ion beams span a plane (10) in which this line lies, wherein this plane (10) is arranged slightly tilted in relation to the surface of the mask (2) by an angle in the range from 0 to 10°, preferably from 0° to 5°, and that the surface of the mask (2) is positioned preferably vertical to the sample surface (2).

11. Method according to claim 2 or 10, **characterised in that** the ion beams (J₁, J₂, J₃) span a circle segment with an angle (α) and this lies in the range from 10° to 180°, preferably in the range from 30° to 140°, and that all ion beams (J₁, J₂, J₃) lie in the plane of this circle segment.

12. Method according to claim 3, **characterised in that** in the wire shadowing process, the ion beams (J₁, J₂, J₃) are guided in a plane (10) which lies parallel to the wire (7), wherein the normal (N) to the sample surface (3) also lies in this plane (10).

13. Method according to claim 3 or 12, **characterised in that** the plane (10) spanned by the ion beams (J) are arranged to the vertical (N) such that they form an angle β which lies in the range of ± 20°, preferably in the range of ± 10°.

14. Method according to claim 3 or 12, **characterised in that** the ion beams (J₁, J₂, J₃) span a circle segment with an angle (α) and this lies in a range from 10° to 180°, preferably in the range from 30° to 140°, and that all ion beams (J₁, J₂, J₃) lie in the plane of this circle segment, wherein preferably two ion beams (J₁, J₂) are operated positioned symmetrical to the surface normal (N).

15. Method according to claim 4, **characterised in that** the ion beams (J₁, J₂, J₃) on at least one side of the sample (1) are oriented lying on a cone casing (11) and that the ion beams meet at the cone tip and hit the impact zone (4) on at least this one sample side.

## Revendications

1. Procédé de fabrication d'un échantillon (1) pour la microscopie électronique, dans lequel ledit échantillon est coupé dans un matériau solide et comprend une face d'échantillon (3) que l'on traite à l'aide d'un faisceau ionique (J) sous un angle d'incidence prédéfini, de manière à obtenir un enlèvement de matériau par décapage de la face d'échantillon (3) jusqu'à ce que soit dégagée sur ledit échantillon (1), au niveau de la zone d'impact (4) du faisceau ionique (J), la surface d'observation (20) souhaitée qui permet l'observation (12) au microscope électronique dans la zone souhaitée de l'échantillon (1), **caractérisé par le fait qu'**au moins trois faisceaux ioniques (J₁, J₂, J₃) fixes, orientés entre eux selon un angle (α) donné, sont dirigés sur la face d'échantillon (3), de sorte telle que les faisceaux ioniques (J₁, J₂, J₃) se coupent, ou au moins se touchent, au niveau de ladite face d'échantillon (3), en formant à cet endroit une zone d'impact (4), et **par le fait que** l'échantillon (1) et les faisceaux ioniques (J₁, J₂, J₃) restent immobiles et sont donc exploités en régime stationnaire.

2. Procédé conforme à la revendication 1, **caractérisé par le fait que** l'échantillon (1) est traité avec les faisceaux ioniques (J₁, J₂, J₃) selon la méthode du décapage ionique.

3. Procédé conforme à la revendication 1 , **caractérisé par le fait que** l'échantillon (1) est traité avec les faisceaux ioniques (J₁, J₂, J₃) selon la méthode de la projection d'ombre.

4. Procédé conforme à la revendication 1 , **caractérisé par le fait qu'**un échantillon TEM standard (1) est traité avec les faisceaux ioniques (J_{1,} J₂) en dirigeant lesdits faisceaux - au nombre d'au moins trois - sur au moins l'une des faces (3a, 3b) de l'échantillon, afin d'en enlever la surface (3a, 3b).

5. Procédé conforme à l'une quelconque des revendications précédentes, **caractérisé par le fait qu'**une pluralité de faisceaux ioniques (J_{1,} J₂) fixes, de préférence au nombre de trois, sont dirigés selon différents angles (α,α',α") sur la face d'échantillon (3), pour le moins en se touchant tous dans la zone d'impact (4) ou, de préférence, en se superposant au moins pour partie.

6. Procédé conforme à l'une quelconque des revendications précédentes, **caractérisé par le fait que** la position réciproque des faisceaux ioniques (J_{1,} J₂) dans la zone d'impact (4) et, par conséquent, leur degré de superposition, est réglable pour au moins l'un des faisceaux, de préférence au cours du décapage.

7. Procédé conforme à l'une quelconque des revendications précédentes, **caractérisé par le fait que** deux au moins des faisceaux ioniques (J_{1,} J₂) sont produits ensemble par une seule source d'ions.

8. Procédé conforme à l'une quelconque des revendications précédentes, **caractérisé par le fait que** deux au moins des faisceaux ioniques (J_{1,} J₂) sont produits chacun par une source d'ions séparée.

9. Procédé conforme à l'une quelconque des revendications précédentes, **caractérisé par le fait que** l'échantillon (1) au repos est observé en haute résolution durant le décapage ionique, au moins par intermittence, à l'aide d'un moyen d'observation, de préférence un microscope optique ou un microscope électronique à balayage.

10. Procédé conforme à la revendication 2, **caractérisé**
- **par** l'utilisation, lors du décapage ionique, d'un cache (2) doté d'une surface plane qui vient s'abouter contre la face d'échantillon (3) à une distance comprise entre 10 µm et 100 µm, de telle sorte que les deux faces forment dans ce secteur une ligne de jonction au niveau de laquelle est située la zone d'impact (4) des faisceaux ioniques (J_{1,} J_{2,} J₃),
- par le fait que les faisceaux ioniques décrivent un plan (10) dans lequel est située ladite ligne de jonction, ledit plan (10) étant légèrement incliné par rapport à la surface du cache (2), selon un angle compris entre 0° et 10°, de préférence entre 0° et 5°
- et par le fait que la surface du cache (2) est disposée, de préférence, perpendiculairement à la face d'échantillon (3).

11. Procédé conforme à la revendication 2 ou 10, **caractérisé par le fait que** les faisceaux ioniques (J_{1,} J_{2,} J₃) décrivent un segment de cercle avec un angle (α) compris entre 10° et 180°, de préférence entre 30° et 140°, et **par le fait que** tous les faisceaux ioniques (J_{1,} J_{2,} J₃) sont situés dans le plan dudit segment de cercle.

12. Procédé conforme à la revendication 3, **caractérisé par le fait qu'**avec la méthode de la projection d'ombre, les faisceaux ioniques (J_{1,} J_{2,} J₃) sont dirigés dans un plan (10) parallèle au fil (7), plan dans lequel se situe également la ligne (N) perpendiculaire à la face d'échantillon (3).

13. Procédé conforme à la revendication 3 ou 12, **caractérisé par le fait que** le plan (10) décrit par les faisceaux ioniques (J) est disposé de telle sorte, par rapport à la perpendiculaire (N), que les deux forment un angle β de l'ordre de ± 20°, de préférence de l'ordre de ± 10°.

14. Procédé conforme à la revendication 3 ou 12, **caractérisé par le fait que** les faisceaux ioniques (J₁, J₂, J₃) décrivent un segment de cercle avec un angle (α) compris entre 10° et 180°, de préférence entre 30° et 140°, et **par le fait que** tous les faisceaux ioniques sont situés dans le plan dudit segment de cercle, deux d'entre eux (J_{1,} J₂₎) étant positionnés, de préférence, symétriquement à la normale (N) de la surface.

15. Procédé conforme à la revendication 4, **caractérisé par le fait que** les faisceaux ioniques (J_{1,} J_{2,} J₃) sont orientés, au moins sur l'une des faces de l'échantillon (1), de telle sorte qu'ils s'inscrivent dans une aire latérale de cône et **par le fait que** les faisceaux sont réunis à la pointe dudit cône, en atteignant la zone d'impact (4) au moins sur cette seule face d'échantillon.
